Europäisches Patentamt

(19) European Patent Office

Office européen des brevets

(11) Publication number: **0 107 699**
**B1**

(12) **EUROPEAN PATENT SPECIFICATION**

(45) Date of publication of patent specification: **21.01.87**

(51) Int. Cl.⁴: **B 60 P 7/06**

(21) Application number: **83901511.2**

(22) Date of filing: **25.03.83**

(86) International application number:
**PCT/US83/00421**

(87) International publication number:
**WO 83/03579 27.10.83 Gazette 83/25**

(54) **CARGO RESTRAINING DEVICE.**

(30) Priority: **20.04.82 US 370131**

(43) Date of publication of application:
**09.05.84 Bulletin 84/19**

(45) Publication of the grant of the patent:
**21.01.87 Bulletin 87/04**

(84) Designated Contracting States:
**AT BE CH DE FR GB LI LU NL SE**

(56) References cited:
**US-A-1 142 088**
**US-A-3 290 051**
**US-A-3 307 658**
**US-A-3 421 775**
**US-A-3 685 460**
**US-A-4 147 112**

(73) Proprietor: **N P MARKETING CORPORATION**
**1303 American Drive**
**Neenah WI 54956 (US)**

(72) Inventor: **VAN GOMPEL, James**
**Route 1, Box 307**
**Fremont, IN 46737 (US)**
Inventor: **AKEY, Ronald R.**
**318 Depot Street, Box 305**
**Footville, WI 53537 (US)**

(74) Representative: **Jones, Michael Raymond et al**
**HASELTINE LAKE & CO. Hazlitt House**
**28 Southampton Buildings Chancery Lane**
**London WC2A 1AT (GB)**

Courier Press, Leamington Spa, England.

## Description

This invention relates to a cargo restraining device and in particular to a device having a platform for association with a pallet loaded with cargo and for retraining the pallet against movement when placed in a vehicular carrier.

Unless a cargo load is adequately secured within its vehicular carrier, motion of the vehicle, especially including acceleration and deacceleration of same, tends to move or shift the cargo with consequent damage to the same and, often as well, damage to the carrier. Heretofore, shippers have generally found it necessary to rely on banding, blocking, or bracing to secure the cargo load and provide for its integrity. Such known practices, however, not only are time-consuming to install and costly, but also rely heavily on individual judgment for their adequacy.

United States Patent No. 4 147 112 discloses a cargo support brace comprising:

a lower floor contacting member, said lower floor contacting member providing a lower ground contacting surface and an upper load bearing surface, said upper load bearing surface being capable of receiving a palletized cargo load thereon, said ground contacting surface and said load bearing surface being angularly deposed to provide a bevel to said lower floor contacting member, said lower floor contacting member comprising a pair of spaced tapered feet and at least one structural cross brace rigidly connecting said pair of spaced tapered feet; and

an upper substantially vertically mounted brace member rigidly connected during operation to said lower floor contacting member, the connection being at the respective end portions of said upper brace member and said lower floor contacting member, said vertical brace member being attached to the thickest end portion of said tapered feet.

The ground contacting surface portion of the lower floor contacting member may be provided with a plurality of surface gripping projections thereon. It is to be appreciated that the lower floor contacting member is located entirely below the pallet and its cargo load. Although the brace of United States Patent No. 4 147 112 is intended to avoid banding or blocking of palletized cargo loads, and is reasonably effective under certain conditions of use, it has been found inadequate for maintaining load integrity under a number of conditions, including when used in truck trailers mounted for piggy-back service on railraod cars. Furthermore, it is also to be appreciated that, during loading of a carrier, the palletized cargo load already on its respective brace is loaded onto the carrier. Moreover, the spikes cannot be used on the metal floors which are found in refrigerated trucks and railroad cars; and further, it is found that the mere substitution of rubber pads for the spikes does not solve this problem.

United States Patent No. 1,559,827 relates to a freight anti-creeping device including a platform having spikes in its underside for gripping the floor, and a projecting lug on its upper face to which the cargo is wired. This projecting lug requires an opening in the cargo, or else the cargo must be mounted around the lug.

United States Patent No. 1,638,612 relates to a device for shipping boxes, which includes anti-skid plates between the boxes and the floor and clamp bars over the boxes, which are drawn to the floor by rods anchored adjacent the floor, blocks being secured to the boxes for preventing movement between the clamp bars and the boxes.

United States Patent No. 2,420,640 to Acteson relates to a demountable pallet crib having frame members which enclose the perimeter of the pallet and form an open-work frame to enclose the cargo.

In another field, namely that of transporting freight around a warehouse, United States Patent No. 3307658 discloses a cart apparatus comprising:

(a) a wheel supported load carrying body;

(b) a frame secured at one end of said body and extending upwardly therefrom;

(c) a generally U-shaped handle having its end portions spaced a distance that is a substantial portion of the width of said body, with said end portions being pivotally secured to said frame at the upper region thereof for rotation about a horizontal axis;

(d) a pair of connecting rods disposed in parallel juxtaposed spaced relation and each having one end pivotally secured to said handle on the outer side thereof adjacent a respective end portion thereof and inwardly of the pivot axis of said handle, and with said connecting rods depending substantially vertically from said handle;

(e) a pair of brake guide levers disposed in parallel juxtaposed spaced relation and each having one end thereof pivotally secured to said cart adjacent a lower region of said frame for rotation about a horizontal axis, and the other end portion thereof pivotally secured to the lower end of a respective said connecting rod; and

(f) an elongated horizontally extending brake shoe assembly fixed at its end portions to the outer end portions of said brake guide levers and having a floor engaging surface extending substantially the entire length of said assembly. Here, as with the brace of United States Patent No. 4147112, the load sits entirely on the wheel supported load carrying body. United States Patent No. 3307658 is entirely silent as regards the load being a palletized load, and its platform is not suitable for receipt between the upper and lower surfaces of a pallet. Moreover, this document does not address itself to the possibility of the cart being carried by a vehicular carrier.

As modern cargo is generally palletized, i.e. placed on a pallet which is conveniently carried by a fork-lift truck and placed on a carrier, it is desirable to reduce the labour required to place the pallet on the floor of the carrier and to fix it in position. Thus, banding, blocking, or elaborate bracing should be avoided, and yet the pallet with its cargo should be restrained from movement while being transported in the carrier; such a result must also be achieved on a metal floor as commonly provided in a refrigerated truck or railway car.

According to the present invention, there is provided a cargo restraining device for restraining a palletized cargo load mounted within a vehicular carrier, the pallet being of the type including an upper load supporting surface and a lower surface separated from the upper surface by cross-ties, the device comprising:

a horizontal platform adapted for receipt between the upper and lower surfaces of the pallet when the pallet has a cargo load thereupon;

a vertical frame at one end of the platform against which frame the palletized load can abut;

a vertically-extending assembly, the lower end of which is adapted frictionally to engage the floor of the carrier at an area laterally displaced from the vertical frame at the side thereof remote from the platform; and

handle means pivotally secured to the frame and to the assembly by a hinge pivotally connected to the frame at a first pivot and to the vertically-extending assembly at a second pivot, thereby to define a double pivot, the handle means and hinge being movable to position whereat the lower end of the assembly is brought into contact with the underlying floor of the carrier and then extended below the level of the pallet to exert an upward jacking force on the adjacent end of the cargo supporting platform, to increase the contact force between the lower end of the assembly and the floor, thus increasing the frictional engagement with the floor, the second pivot in this position being displaced past its vertically aligned lowermost point of rotation with respect to the first pivot and toward the vertical frame, the vertically-extending assembly being thereby angled with its lower end further away from the vertical frame and platform than its upper end, thereby locking the handle in this position.

The device of the present invention can secure a palletized load within a vehicular carrier against movement such as creeping or shifting.

The device of the present invention is simple to use both when fixing in position a palletized load already loaded onto a carrier, and when releasing the palletized load when it reaches its destination.

The device of the present invention can satisfactorily secure and release a palletized load in a carrier, and requires very little effort to operate, and is simple to construct. The device can be used for securing and releasing a palletized load in a carrier of the type intended to refrigerate a load, which carrier is provided with a metal floor with ribs or spaced longitudinally-extending channels which allow cold air to circulate around the cargo.

Preferably the lower end of the assembly comprises a horizontally-extending member at least the lower surface of which comprises a high friction material.

The device may also include means for releasably and positively engaging a part of the pallet when the horizontal platform is received within the pallet, thereby locking the pallet to the device. The means for engaging the pallet may include a serrated member. The teeth may engage the pallet cross-tie.

The pallet may also include a lever coupled to the serrated member and resiliently biased to tend to urge the serrated member to engage the pallet.

Preferably the serrated member is pivotally connected with respect to a portion of the horizontal platform.

Thus a preferred embodiment of the device of the present invention is that wherein the means for releasably and positively engaging a part of the pallet includes a serrated member having teeth for engaging a pallet cross-tie member, the serrated member being pivotally secured to a portion of the platform, a movable lever connected to the serrated member, and resilient means tending to urge the lever in that direction which causes the serrated member to engage the pallet, whereby movement of the lever against the resilient means causes the serrated member to rotate, releasing the teeth of the serrated member from said cross-tie.

When the device is brought into association with the pallet, the device may immediately be locked in place by a serrated member which engages a cross-tie or runner of the pallet. The pallet can only be released by disengaging the teeth of the serrated member. This can be accomplished by a resiliently biased lever coupled to the serrated member.

To lock the pallet to the floor of the carrier after it has been associated with the platform of the device, the handle means is pushed downwardly, which pushes the vertically-extending assembly away from the vertical frame and horizontal platform, and toward the floor, i.e. the lower end of the assembly moves below the plane of the pallet. This in turn tends to lift one edge of the pallet in jack-like fashion, adding the weight of the cargo to the downward force on the vertically-extending assembly. Continued movement of the handle locks the vertically-extending member in its extended position restraining the pallet against movement. Since the pallet is also secured to the platform, the cargo is securely held in place.

For a better understanding of the present invention, reference will now be made, by way of example, to the accompanying drawings, in which:

Figure 1 is a perspective view showing a palletized cargo load secured by one embodiment of a cargo restraining device according to the present invention;

Figure 2 is a partial perspective view of the cargo restraining device of Figure 1 with the device released from, but still associated with, the pallet;

Figure 3 is a partial perspective view of the cargo restraining device of Figure 1 secured to the pallet and to the floor of the carrier;

Figure 4 is a side elevational view, partly in section, of the cargo restraining device of Figure 1 clamped on the floor of the carrier;

Figure 5 is a plan view, partly in section, of the same device showing the pallet-engaging mechanism;

Figure 6 is a perspective view, partly in section, showing the pallet-engaging mechanism; and

Figure 7 is a plan view, partly in section, of the pallet-engaging mechanism.

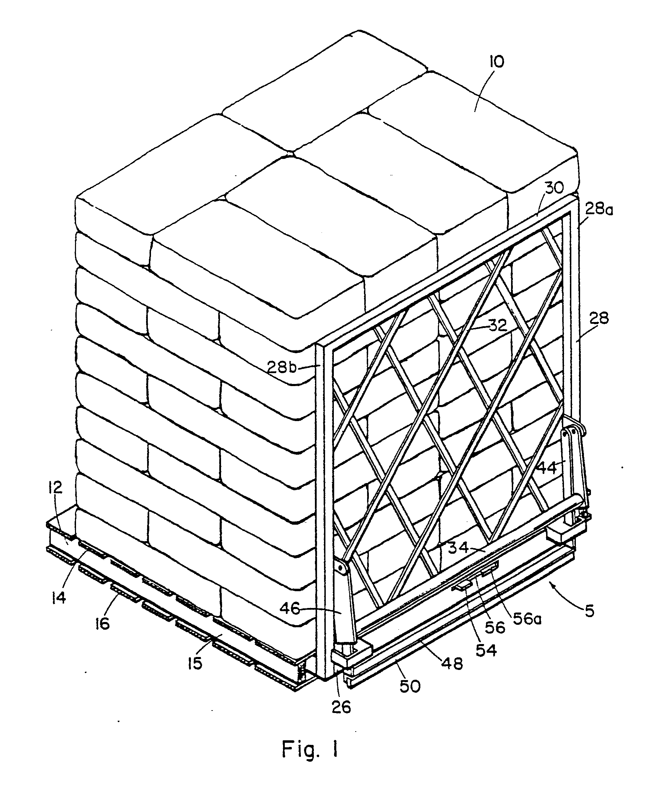

Referring to Figure 1, a palletized load 10 is shown, supported on a conventional pallet 12, the load and pallet being associated with a cargo-restraining device 5 in accordance with the present invention.

For purposes of the present discussion, the load 10 can be regarded as being of a type requiring refrigeration in shipment. Usually, therefore, such loads are shipped in refrigerator truck bodies or refrigerated railway cars. The floors of these carriers commonly comprise steel or the like, and channels or troughs often extend lengthwise in the carrier floors to enable refrigerated air to be circulated for load cooling.

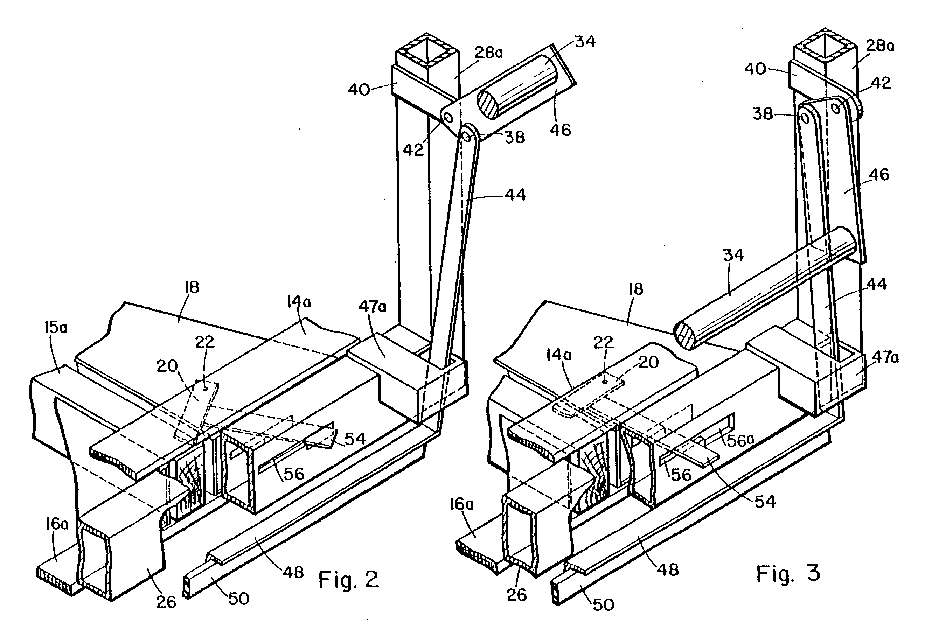

The pallet 12 generally comprises an upper supporting surface 14 comprising a plurality of wooden planks, and a lower surface 16 comprised of similar planks, with the upper and lower surfaces being separated by cross-ties 15, one of which 15a (Figures 2 and 3) is at approximately the centre of the pallet.

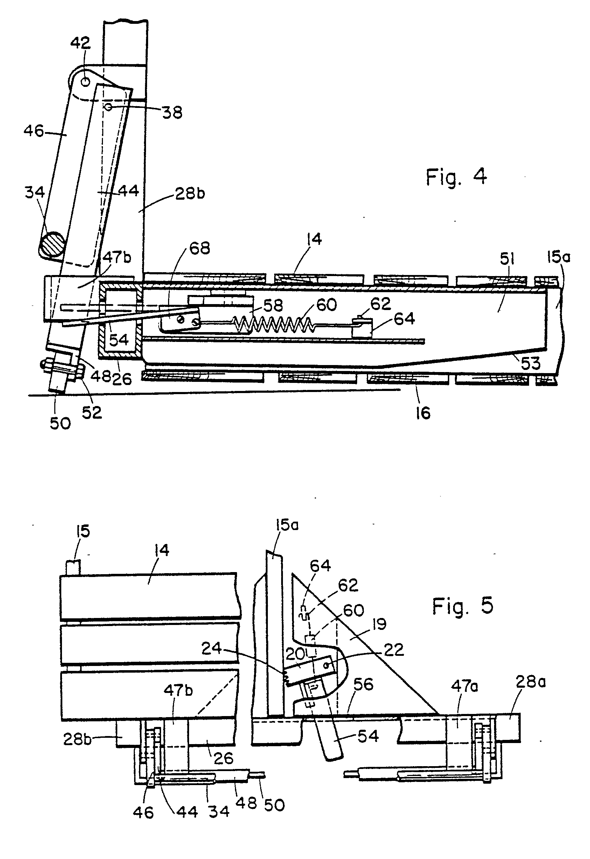

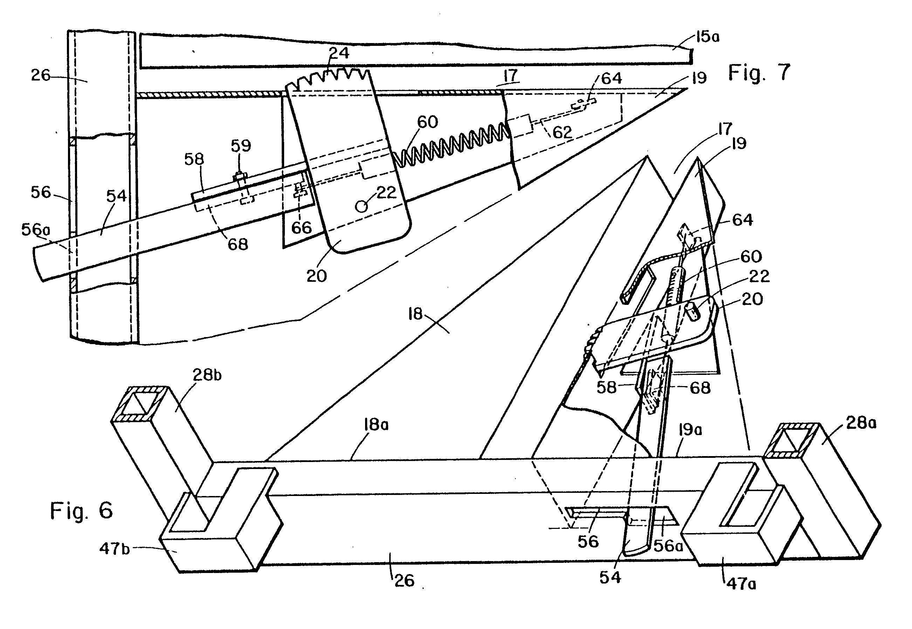

In a preferred embodiment of the present invention, the cross-tie 15a slides into a slot 17 between two generally triangular-shaped plates 18, 19 (Figures 5 and 6), which comprise the horizontal portion of the generally L-shaped device 5, and which thus form a platform for the loaded pallet. As seen in Figure 4, the side walls 51 of plates 18 and 19 which abound slot 17 are bevelled at 53 toward their rear, to facilitate insertion of the platform into the space between the upper surface 14 and the lower surface 16 of the pallet. Cross-tie 15a is, in the illustrated embodiment, held or locked in its received position by a serrated member 20, which pivots about a pin 22, and has teeth 24 which pierce the wooden cross-tie 15a.

The base ends 18a and 19a of each triangular-shaped plate are secured to a lower horizontal beam 26 of a generally rectangular vertical frame 28 (Figure 1) having upright legs 28a and 28b, and an upper cross-beam 30. The upper and lower cross-beams and upright legs of the vertical frame 28 are braced by diagonally extending members 32.

A handle 34 is secured at each end to a hinge 46 which is pivotally secured to a plate 40 connected to the vertical legs 28a and 28b of the frame by a pin 42: the plate 46 is also pivotally secured by a pin 38 to members 44 of a vertically extending assembly; there is thus in effect formed a double pivot for the handle 34. The handle 34 is thus connected at each end, through hinge 46 and pins 38 and 42, to the generally vertically extending assembly which includes the members 44. The lower ends of the members 44 are surrounded by bumper guards 47a and 47b, and are connected to a cross-bar 48 carrying on its underside a horizontally extending member 50 secured to the cross-bar by a bolt 52. With the handle 34 in the upper position (Figure 2), the cross-bar 48, and in particular the member 50, is above the plane of the bottom of the pallet 12, and is thus above the carrier floor, or supporting surface. When the handle 34 is moved to the lowered position (Figures 1 and 3) however, the member 50 first contacts the underlying floor and then is extended below the pallet 12 and to a position laterally displaced to one side of the frame 28, to prevent movement of the device 5 with the load thereon. Preferably, the horizontally extending member 50 comprises, or is covered with, a high frictional material such as rubber, in order to obtain a greater frictional force from its contact with the floor.

With a cargo load on the pallet, and with the triangular-shaped plates 18, 19 located within the pallet, downward movement of the handle 34 thus results in movement of the vertically extending members 44 inwardly towards the frame 28, and the horizontally extending member 50 into contact with the floor. Also because of the double pivot, when the horizontal member 50 reaches the floor, the frame 28 is moved rearwardly with respect to the member 50. The triangular-shaped members 18 and 19 which support the pallet 12 are raised vertically with respect to the member 50 tilting upwardly the rearward end of the pallet and load, as shown in Figure 4. This results in an additional downward force from the cargo, upon the horizontal member 50. Further, the double-pivoting action of handle 34 results in locking of same (and of member 50) in the downward position, whereby the restraining device 5 effectively locks the pallet and load to the floor of the carrier until the handle 34 is later raised to the position of Figure 2.

In order to release the pallet after the handle 34 is raised, the serrated member 20 must be disengaged from cross-tie 15a. This is accomplished by moving a lever 54 to the right in a slot 56, the right end 56a of which is larger, or deeper, to allow the lever 54 to drop down. The lever 54 is connected to an arm 58 by a bolt or pin 59, the arm 58 being secured to the serrated member 20. Thus, moving the lever 54 to the right causes the serrated member 20 to pivot counter-clockwise about the pin 22, causing the teeth 24 to disengage the cross-tie 15a, permitting the device to be withdrawn from the pallet 12.

In order that the cross-tie 15a of the pallet 12 may be engaged when the triangular-shaped plates 18 and 19 are located between the upper and lower surfaces 14 and 16 of the pallet, the lever 54 should, of course, be lifted and moved to the left in the slot 56. When the lever 54 is lifted, a spring 60 secured at one end by a hook 62 in an apertured plate 64, and at the other end to a pin 66 in a vertical bracket 68 to which arm 58 is secured by a bolt or pin 59, causes the serrated member 20 to rotate clockwise about the pin 22 so that it is ready to engage the cross-tie 15a.

When in practice, a palletized cargo load 10 is brought into a carrier by a fork-lift truck, it is placed in the desired position, and then a cargo restraining device is brought up so that the cross-tie 15a is placed between the triangular-shaped plates 18 and 19 so that it rests in the slot 17. If lever 54 has been returned to its original position (to the left in slot 56) as it should have been after the device was removed from a previous pallet, the teeth 24 of the serrated member 20 will pierce the wooden cross-tie 15a and firmly hold it in place.

Thereafter, the handle 34 is grasped and displaced downwardly while pushing against the frame 28, which will result in the horizontal member 50 contacting the carrier floor and then slightly tilting the load as previously discussed, to restrain movement of the device 5. Frictional contact of the horizontal member 50 is increased by the weight of the load on the pallet 12 which has tilted upwardly at its rear end, placing further force on the horizontal member 50.

Thus, the palletized cargo is firmly secured and prevented from moving while it is being transported. Upon reaching its destination, to release the pallet with its cargo load, the handle 34 is returned to its upper position which lifts the horizontal member 50 off the carrier floor. The lever 54 is moved to the right, e.g. by moving it with a foot, and this causes the serrated member 20 to move counter-clockwise, releasing the teeth 24 from the cross-tie 15a. The restraining device can now be removed from the pallet.

While the present invention has been especially illustrated in terms of the specific embodiment thereof, it will be understood that numerous variations are possible whilst remaining within the scope of the claims. Thus, for example, while the particular linkage arrangement utilized with handle 34, results in downward displacement of member 50 when the handle is moved downwardly, linkage arrangements are possible which could achieve this same result with upward movement of the said handle.

## Claims

1. A cargo restraining device for restraining a palletized cargo load mounted within a vehicular carrier, the pallet being of the type including an upper load supporting surface and a lower surface separated from the upper surface by cross-ties, the device comprising:
a horizontal platform adapted for receipt between the upper and lower surfaces of the pallet when the pallet has a cargo load thereupon;
a vertical frame at one end of the platform, against which frame the palletized load can abut;
a vertically-extending assembly, the lower end of which is adapted frictionally to engage the floor of the carrier at an area laterally displaced from the vertical frame at the side thereof remote from the platform; and
handle means pivotally secured to the frame and to the assembly by a hinge pivotally connected to the frame at a first pivot and to the vertically-extending assembly at a second pivot, thereby to define a double pivot, the handle means and hinge being movable to a position whereat the lower end of the assembly is brought into contact with the underlying floor of the carrier and then extended below the level of the pallet to exert an upward jacking force on the adjacent end of the cargo supporting platform, to increase the contact force between the lower end of the assembly and the floor, thus increasing the frictional engagement with the floor, the second pivot in this position being displaced past its vertically aligned lowermost point of rotation with respect to the first pivot and toward the vertical frame, the vertically-extending assembly being thereby angled with its lower end further away from the vertical frame and platform than its upper end, thereby locking the handle in this position.

2. A device according to Claim 1, wherein the lower end of the assembly comprises a horizontally-extending member at least the lower surface of which comprises a high friction material.

3. A device according to Claim 1 or 2, which also includes means for releasably and positively engaging a part of the pallet when the horizontal platform is received within the pallet, thereby locking the pallet to the device.

4. A device according to Claim 3 wherein the means for engaging the pallet includes a serrated member which engages the pallet.

5. A device according to Claim 4, wherein the serrated member has teeth which engage the pallet cross-tie, preventing movement of the cross-tie.

6. A device according to Claim 4 or 5, wherein the means for releasably engaging a part of the pallet also includes a lever coupled to the serrated member and resiliently biased to tend to urge the serrated member to engage the pallet.

7. A device according to Claim 4, 5 or 6, wherein the serrated member is pivotally connected with respect to a portion of the horizontal platform.

8. A device according to Claim 3, wherein the means for releasably and positively engaging a part of the pallet includes a serrated member having teeth for engaging a pallet cross-tie member, the serrated member being pivotally secured to a portion of the platform, a movable lever connected to the serrated member, and resilient means tending to urge the lever in that direction which causes the serrated member to engage the pallet, whereby movement of the lever against the resilient means causes the serrated member to rotate, releasing the teeth of the serrated member from said crosstie.

## Patentansprüche

1. Lastabstützvorrichtung zum Abstützen einer in einem fahrbaren Transporteur palettierten Last, wobei die Palette eine obere Lasttragfläche und eine untere Aufsetzfläche aufweist, die von der oberen Fläche durch Schwellen getrennt ist und die Vorrichtung folgende Teile aufweist:

eine horizontale Plattform, die zwischen die obere und untere Fläche der Palette einführbar ist, wenn sich eine Last auf der Palette befindet;

einen vertikalen Rahmen, der sich an einem Ende der Plattform befindet und der bis zum Anschlag an die palettierte Last gebracht werden kann;

eine vertikale Anordnung, deren Unterende den Boden des Transporteurs reibungsschlüssig an einer Fläche beaufschlagen kann, die gegen den vertikalen Rahmen seitlich versetzt ist, und zwar an der der Plattform abgewendeten Seite, und

eine Handhabe, die am Rahmen und an der Anordnung durch ein Scharnier schwenkbar befestigt ist, welches an einer ersten Schwenkachse mit dem Rahmen und an einer zweiten Schwenkachse mit der vertikalen Anordnung verbunden ist, wodurch ein Doppeldrehgelenk gebildet wird und die Handhabe sowie das Scharnier in eine Lage bewegbar sind, wo das Unterende der Anordnung den Boden, auf dem der Transporteur steht, berührt und sodann noch das Niveau der Palette unterschreitet, wobei eine nach oben gerichtete Hebekraft auf das benachbarte Ende der lasttragenden Plattform ausgeübt wird, die Berührungskraft zwischen dem Unterende der Anordnung und dem Boden und damit den Grad des Reibungsschlusses mit dem Boden vergrössert, und wobei die zweite Schwenkachse in dieser Stellung hinter den vertikal gerichteten untersten Drehpunkt, auf die erste Schwenkachse und gegen den vertikalen Rahmen bezogen, gelangt und die vertikale Anordnung dabei mit ihrem Unterende winkelmässig vom vertikalen Rahmen und der Plattform weiter entfernt wird als ihr Oberende, wodurch die Handhabe in dieser Stellung festgelegt wird.

2. Vorrichtung nach Anspruch 1, bei der das Unterende der Anordnung ein horizontales Organ aufweist, wobei mindestens dessen Unterseite mit einem Werkstoff hoher Reibung ausgerüstet ist.

3. Vorrichtung nach Anspruch 1 oder 2, die weiterhin Mittel zur lösbaren Verbindung mit einem Teil der Palette besitzt, die ihre Wirkung ausüben, wenn die horizontale Plattform sich im Inneren der Palette befindet, und die Palette mit der Vorrichtung verbinden.

4. Vorrichtung nach Anspruch 3, bei der die Mittel zur Verbindung mit der Palette ein gezacktes Organ aufweisen, das an der Palette angreift.

5. Vorrichtung nach Anspruch 4, bei der das gezackte Organ Zähne besitzt, die an den Palettenschwellen angreifen und deren Bewegung verhindern.

6. Vorrichtung nach Anspruch 4 oder 5, bei der die Mittel zur lösbaren Verbindung mit einem Teil der Palette weiterhin einen Hebel aufweisen, der mit dem gezackten Organ verbunden und in Richtung eines Angriffs des gezackten Organs an die Palette federnd vorgespannt ist.

7. Vorrichtung nach Anspruch 4, 5 oder 6, bei der das gezackte Organ drehbar mit einem Teil der horizontalen Plattform verbunden ist.

8. Vorrichtung nach Anspruch 3, bei der die Mittel zur lösbaren Verbindung mit einem Teil der Palette ein gezacktes Organ, das mit Zähnen zum Angriff an einer Palettenschwelle ausgerüstet und drehbar an einem Teil der Plattform angebracht ist, einen mit dem gezackten Organ verbundenen beweglichen Hebel und Federmittel aufweisen, die den Hebel in eine Richtung vorspannen, die das gezackte Organ in Angriff an die Palette bringen, wobei eine Bewegung des Hebels in Richtung der Federmittel eine Drehung des gezackten Organs bewirkt, derart, dass dessen Zähne von der genannten Palettenschwelle gelöst werden.

## Revendications

1. Dispositif d'arrimage de cargaison pour arrimer un chargement sur palette monté sur un porteur transportable, la palette étant du type comportant une surface supérieure de chargement et une surface inférieure séparée de la surface supérieure par des traverses, ce dispositif comprenant:

une plateforme horizontale adaptée pour s'engager entre les surfaces supérieure et inférieure de la palette lorsque la palette comporte un chargement;

un cadre vertical à une extrémité de la plateforme, contre lequel le chargement sur palette peut s'appuyer;

un assemblage s'étendant verticalement, dont la partie inférieure est prévue pour s'engager par friction dans le sol du porteur, dans une région en dehors latéralement du cadre vertical sur le côté de celui-ci opposé à la plateforme; et

des moyens de commande montés pivotants sur le cadre de l'assemblage au moyen d'une charnière montée pivotante sur le cadre par un premier pivot, et sur l'assemblage s'étendant verticalement par un deuxième pivot, de manière à définir ainsi un double pivot, les moyens de commande et la charnière pouvant être mise dans une position dans laquelle l'extrémité inférieure de l'assemblage est amenée en contact avec le sol du porteur se trouvant au-dessous et ensuite étendue au-dessous du niveau de la palette de manière à exercer une force dirigée vers le haut sur l'extrémité adjacente de la plateforme supportant le chargement, pour augmenter la force de contact entre l'extrémité inférieure de l'assemblage et le sol, augmentant ainsi l'engagement par friction avec le sol, le second pivot étant déplacé dans cette position encore plus loin que son point de rotation le plus bas dans l'alignement vertical par rapport au premier pivot et du côté du cadre vertical, l'assemblage s'étendant

verticalement ainsi dans une position angulaire où son extrémité inférieure est davantage éloignée du cadre vertical et de la plateforme que son extrémité supérieure, bloquant ainsi la commande dans cette position.

2. Dispositif selon la revendication 1, dans lequel l'extrémité inférieure de l'assemblage comprend un élément s'étendant horizontalement dont au moins la surface inférieure comporte un matériau à coefficient de friction élevé.

3. Dispositif selon la revendication 1 ou 2, comprenant encore des moyens d'engagement détachables d'une partie de la palette, lorsque la plateforme horizontale est prise dans la palette, verrouillant ainsi la palette au dispositif.

4. Dispositif selon la revendication 3, dans lequel les moyens d'engagement de la palette comportent un membre crénelee qui engage la palette.

5. Dispositif selon la revendication 4, dans lequel le membre crénelé a des dents s'engageant dans la traverse de la palette en empêchant le mouvement de la traverse.

6. Dispositif selon la revendication 4 ou 5, dans lequel les moyens d'engagement détachables d'une partie de la palette comportent également un levier couplé au membre crénelé et élastiquement précontraint pour avoir une tendance à presser le membre crénelé en engagement avec la palette.

7. Dispositif selon l'une des revendications 4, 5 ou 6, caracterisé en ce que le membre crénelé est articulé en respect d'une partie de la plateforme horizontale.

8. Dispositif selon la revendication 3, dans lequel les moyens d'engagement détachables d'une partie de la palette comportent un membre crénelé ayant des dents prévues pour s'engager avec une traverse de la palette, le membre crénelé étant monté pivotant sur une partie de la plateforme, un levier mobile connecté au membre crénelé et des moyens élastiques tendant à presser le levier dans une direction telle que le membre crénelé s'engage avec la palett, dans lequel le mouvement du levier à l'encontre des moyens élastiques fait tourner le membre crénelé détachant les dents du membre crénelé de la dite traverse.

Fig. 1

Fig. 2

Fig. 3

Fig. 4

Fig. 5

Fig. 7

Fig. 6

0 107 699